Europäisches Patentamt

European Patent Office

Office européen des brevets

(19)

(11) **EP 1 288 675 B1**

(12) **FASCICULE DE BREVET EUROPEEN**

(45) Date de publication et mention
de la délivrance du brevet:
**20.12.2006  Bulletin 2006/51**

(51) Int Cl.:
*G01S 11/06* (2006.01)   *H04Q 7/38* (2006.01)

(21) Numéro de dépôt: **01121077.0**

(22) Date de dépôt: **03.09.2001**

(54) **Procédé et dispositif d'estimation de la vitesse de déplacement d'un terminal mobile, en particulier un téléphone mobile cellulaire**

Verfahren und Vorrichtung zur Schätzung der Geschwindigkeit eines mobilen Endgeräts, insbesondere eines zellularen Mobiltelefons

Method and device for estimating the velocity of a mobile terminal, in particular, of a cellular telephone

(84) Etats contractants désignés:
**DE FR GB IT**

(43) Date de publication de la demande:
**05.03.2003  Bulletin 2003/10**

(73) Titulaire: **STMicroelectronics N.V.**
**1077 XX Amsterdam (NL)**

(72) Inventeur: **Kirsch, Miguel**
**1296 Coppet (CH)**

(74) Mandataire: **Dossmann, Gérard**
**Bureau Casalonga & Josse**
**Bayerstrasse 71/73**
**80335 München (DE)**

(56) Documents cités:
**EP-A- 1 014 107**      **EP-A- 1 026 518**

• **AUSTIN M D ET AL: "VELOCITY ADAPTIVE HANDOFF ALGORITHMS FOR MICROCELLULAR SYSTEMS" IEEE TRANSACTIONS ON VEHICULAR TECHNOLOGY, IEEE INC. NEW YORK, US, vol. 43, no. 3, PART 1, 1 août 1994 (1994-08-01), pages 549-561, XP000466790 ISSN: 0018-9545**

## Description

La présente invention concerne la transmission d'informations numériques, notamment mais non exclusivement dans le domaine du téléphone mobile cellulaire tel que celui prévu dans le système GSM ou bien dans le système WCDMA.

L'invention concerne plus particulièrement l'estimation de la vitesse de déplacement d'un terminal mobile, en particulier un téléphone mobile cellulaire, dialoguant avec une station par l'intermédiaire d'un canal de transmission qui véhicule les informations entre le terminal et la station via un moyen de propagation. Ce moyen de propagation peut être de l'air dans le cas des téléphones mobiles cellulaires.

Chaque station de base du système de communication rayonne dans une cellule et dialogue par conséquent avec tous les téléphones qui se situent dans cette cellule. Lorsque l'utilisateur d'un téléphone se déplace pour venir en bordure de cellule, la station de base peut décider, en fonction de paramètres spécifiques mesurés par le téléphone, de passer la main à une autre station debase.

Or, l'estimation de la vitesse de déplacement du téléphone mobile est un paramètre qui peut être pris en compte par la station de base pour sa prise de décision quant au transfert vers une autre station de base.

L'estimation de la vitesse peut aussi être utilisée pour améliorer le contrôle de la puissance de réception du signal.

On connaît par la demande de brevet européen n° 1 014 107, une méthode d'estimation de la vitesse de déplacement d'un téléphone mobile cellulaire. Cette méthode est basée sur une auto-corrélation de la puissance filtrée du signal reçu. Cependant, une telle méthode est sensible aux caractéristiques du canal de transmission, en particulier le nombre de coefficients de sa réponse impulsionnelle. Par ailleurs, cette méthode ne permet d'obtenir qu'une information binaire, à savoir une information de vitesse basse ou de vitesse élevée du téléphone mobile.

La demande de brevet européen n° 1 026 518 décrit un procédé d'estimation de la vitesse de déplacement d'une station mobile d'un système de télécommunication, par un traitement des signaux transmis entre un émetteur et un récepteur. En étudiant les variations de la puissance du signal émis à l'aide de l'auto-covariance, le dispositif en déduit la vitesse de déplacement. Cependant, cette méthode dépend du nombre d'échantillons temporels considérés, desquels dépend la fiabilité des calculs effectués.

L'article « Velocity Adaptative Handoff Algorithms for Microcellulars Systems » par Marc D. Austin présente un dispositif estimant la vitesse inter-cellulaire de déplacement d'un système mobile, basée sur un modèle de canal avec des évanouissements décrivant une statistique de Rice. Le calcul de la vitesse inter-cellulaire utilise l'auto-covariance normalisée dé la puissance instantanée du signal reçu.

L'invention vise à remédier à ces inconvénients.

Un but de l'invention est de proposer une estimation de la vitesse de déplacement du mobile, qui présente une marge d'erreur plus faible et qui soit indépendante du nombre de coefficients de la réponse impulsionnelle du canal.

L'invention a également pour but de proposer une estimation de vitesse qui permette d'obtenir une valeur de vitesse et non plus seulement une indication binaire du type vitesse lente ou vitesse rapide.

Telle que revendiquée, l'invention propose un procédé d'estimation de la vitesse de déplacement d'un terminal mobile d'un système de communication sans fil dialoguant avec une station, dans lequel l'estimation de la vitesse comporte un calcul d'une auto-covariance normalisée de la puissance instantanée du signal reçu par le terminal ou par la station.

En d'autres termes, l'estimation de vitesse est basée ici sur une auto-covariance normalisée et non plus sur une auto-corrélation comme dans l'art antérieur. On rappelle ici que l'auto-covariance d'un signal est en fait l'auto-corrélation de ce signal à laquelle on a retranché la valeur moyenne du signal. Et, le fait de calculer une auto-covariance normalisée permet d'obtenir un résultat indépendant du nombre de coefficients de la réponse impulsionnelle du canal, et l'information de vitesse qui en découle est alors obtenue avec une marge d'erreur plus faible.

Selon l'invention, le calcul de l'auto-covariance normalisée est effectué avec un paramètre de décalage temporel $\tau$ choisi de façon à obtenir un résultat d'auto-covariance normalisée compris entre un seuil inférieur et un seuil supérieur prédéterminés. Ceci permet de fournir une mesure la plus exacte possible de la vitesse de déplacement du mobile. En effet, on se situe alors dans une zone quasi linéaire et monotone de la courbe d'auto-covariance normalisée.

Ce seuil inférieur est choisi égal à environ 0,2, tandis que le seuil supérieur est choisi égal à environ 0,8.

L'estimation de vitesse comporte alors avantageusement une adaptation de la valeur du paramètre $\tau$ de façon à obtenir un résultat d'auto-covariance normalisée situé entre le seuil inférieur et le seuil supérieur.

Selon un mode de mise en oeuvre de l'invention, le calcul de l'auto-covariance normalisée comporte un calcul de puissance du signal puis un filtrage passe-bas et une soustraction de la puissance moyennée.

Selon un mode de mise en oeuvre, lorsque le signal véhicule des informations formées de fragments («chips» en langue anglaise) incorporés au sein d'intervalles successifs contenant chacun un nombre prédéterminé de fragments, le calcul de l'auto-covariance normalisée s'effectue sur M intervalles mutuellement décalés temporellement du paramètre de décalage temporel $\tau$. Le calcul de la puissance du signal et le filtrage passe-bas comportent alors pour chacun des M intervalles, un calcul de puissance sur un nombre prédéterminé P de fragments de l'intervalle considéré, de façon à obtenir P échantillons de puissance, puis une moyenne de ces P échantillons de façon à obtenir un seul échantillon final de puissance pour ledit intervalle considéré. La détermination de la puissance moyennée s'effectue alors par une moyenne des M échantillons finals de puissance.

L'estimation de vitesse peut comporter alors une adaptation de la valeur du paramètre τ et une adaptation de la valeur de M, M augmentant lorsque τ diminue et diminuant lorsque τ augmente.

Telle que revendiquée, l'invention a également pour objet un dispositif d'estimation de la vitesse de déplacement d'un terminal mobile d'un système de communication sans fil dialoguant avec une station.

Le dispositif comprend une entrée pour recevoir le signal transmis entre la station et le terminal, et des moyens d'estimation de vitesse comportant des moyens de traitement aptes à calculer une auto-covariance normalisée de la puissance instantanée du signal reçu sur ladite entrée.

Selon l'invention, les moyens de traitement sont aptes à calculer l'auto-covariance normalisée avec un paramètre de décalage temporel τ choisi de façon à obtenir un résultat d'auto-covariance normalisée compris entre un seuil inférieur et un seuil supérieur prédéterminés, par exemple compris entre 0,2 et 0,8 environ.

Les moyens d'estimation de vitesse comportent avantageusement des moyens d'adaptation aptes à effectuer une adaptation de la valeur du paramètre τ, de façon à obtenir un résultat d'auto-covariance normalisée situé entre le seuil inférieur et le seuil supérieur.

Selon un mode de réalisation de l'invention, les moyens de traitement comportent des premiers moyens de calcul de puissance aptes à calculer la puissance instantanée du signal, des moyens de filtrage passe-bas, des deuxièmes moyens de calcul aptes à calculer une puissance moyenne et des moyens de soustraction aptes à retrancher cette puissance moyenne de l'auto-corrélation de la puissance instantanée.

Lorsque le signal véhicule des informations formées de fragments incorporés au sein d'intervalles successifs contenant chacun un nombre prédéterminé de fragments, les moyens de traitement sont avantageusement aptes à effectuer le calcul de l'auto-covariance normalisée sur M intervalles mutuellement décalés temporellement du paramètre de décalage temporel τ de l'auto-covariance normalisée.

Les premiers moyens de calcul et les moyens de filtrage passe-bas sont alors aptes pour chacun des M intervalles, à effectuer un calcul de puissance sur un nombre prédéterminé P de fragments de l'intervalle considéré de façon à obtenir P échantillons de puissance, puis une moyenne de ces P échantillons de façon à obtenir un seul échantillon final de puissance pour ledit intervalle considéré. Les deuxièmes moyens de calcul effectuent alors une moyenne des M échantillons finals de puissance.

Les moyens d'adaptation sont également avantageusement aptes à effectuer une adaptation de la valeur de M, M augmentant lorsque τ diminue, et diminuant lorsque τ augmente.

L'invention a également pour objet un terminal mobile, en particulier un téléphone mobile cellulaire, comprenant un dispositif d'estimation de vitesse tel que défini ci-avant.

L'invention a encore pour objet une station d'un système de communication sans fil apte à dialoguer avec un terminal mobile, comportant un dispositif d'estimation de vitesse tel que défini ci-avant.

D'autres avantages et caractéristiques de l'invention apparaîtront à l'examen de la description détaillée de modes de mise en oeuvre et de réalisation, nullement limitatifs, et des dessins annexés, sur lesquels :

- la figure 1 illustre schématiquement une station de base et un téléphone mobile cellulaire capables de mettre en oeuvre le procédé selon l'invention ;

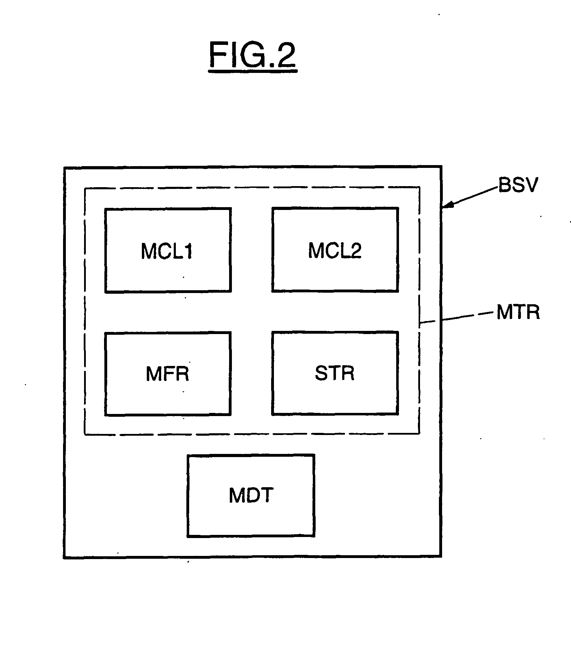

- la figure 2 illustre plus en détail mais toujours de façon schématique, la structure interne des moyens d'estimation de vitesse d'un téléphone selon l'invention ;
- la figure 3 illustre schématiquement un mode de mise en oeuvre de l'invention ;
- les figures 4 et 5 illustrent deux courbes d'auto-covariance normalisée pour deux valeurs différentes du paramètre τ ; et
- la figure 6 illustre un mode de mise en oeuvre du procédé selon l'invention, permettant une adaptation du paramètre τ

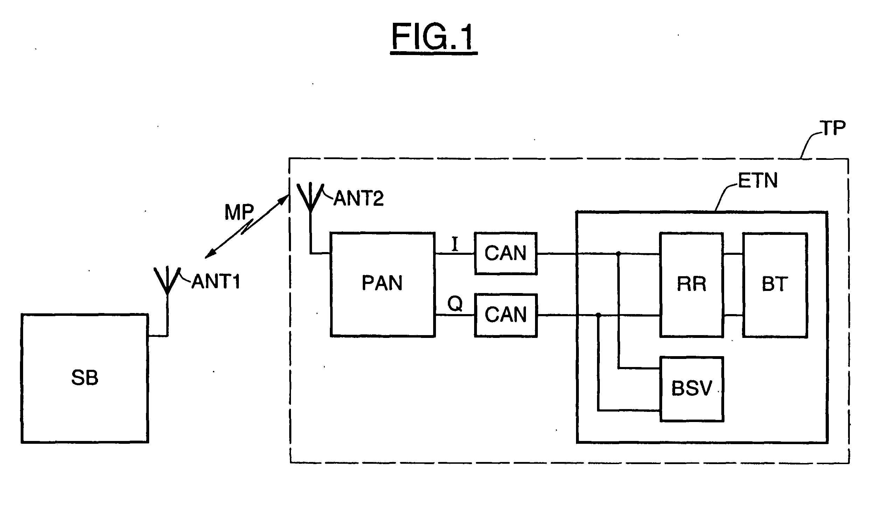

Sur la figure 1, la référence SB désigne un émetteur, par exemple une station de base. Cette station de base reçoit les données utiles à transmettre, par exemple de la parole, et effectue notamment les traitements classiques dits « de codage de canal » en introduisant des redondances dans le flot de données. La station SB comporte également classiquement un modulateur effectuant par exemple une modulation en quadrature de type QPSK ou 8PSK, selon une dénomination bien connue de l'homme du métier et transformant le signal binaire issu du traitement de codage de canal, en un signal analogique. Le signal analogique est ensuite filtré dans un filtre d'émission avant d'être émis en direction du récepteur TP via une antenne ANT1.

Le moyen de propagation MP entre la station de base SB et un récepteur TP, constitué ici d'un téléphone mobile cellulaire, est dans le cas présent l'air.

Le téléphone mobile cellulaire TP comporte essentiellement en tête une antenne ANT2 couplée à un étage analogique PAN réalisant essentiellement une conversion de fréquence pour ramener le signal reçu en bande de base, et un filtrage pour ne conserver que la partie utile du spectre. La sortie de l'étage analogique PAN est formée de deux signaux en quadrature I et Q selon des dénominations bien connues de l'homme du métier.

Après échantillonnage et conversion analogique/numérique dans des convertisseurs CAN, les deux signaux I et Q sont délivrés à un étage de traitement numérique ETN.

Lorsque le système de communication sans fil est un système CDMA (système à accès multiples par division de code : « Code Division Multiple Access », en langue anglaise), tel que les différents systèmes de téléphone mobile basés sur le système CDMA, comme le système CDMA 2000, le système WCDMA (« Wide Band CDMA », en langue anglaise ; CDMA large bande) ou la norme IS-95, l'étage de traitement numérique ETN comprend de façon classique, un récepteur RR, communément désigné par l'homme du métier sous la dénomination de « récepteur RAKE ». Ce récepteur RR est suivi d'un bloc de traitement BT qui effectue de façon classique un traitement de démodulation de la constellation délivrée par le récepteur Rake RR, puis un décodage de source bien connu de l'homme du métier.

On rappelle ici que les schémas CDMA permettent aux utilisateurs multiples de partager une fréquence commune et un canal temporel commun en utilisant une modulation codée.

Ainsi, comme il est bien connu de l'homme du métier, avant transmission via l'antenne de la station de base SB, le signal initial contenant les informations (symboles) est embrouillé (« scrambled » en langue anglaise) et étalé (« spreaded ») par des moyens de traitement de la station de base, en utilisant un code d'embrouillage (« scrambling code ») de la station de base et le code orthogonal (code OVSF) du téléphone TP.

Par ailleurs, en raison des réflexions possibles du signal initialement transmis, sur des obstacles se situant entre la station de base et le téléphone mobile, le milieu de transmission est en fait un milieu de transmission multi-trajets, c'est-à-dire comprenant plusieurs chemins de transmission différents. En conséquence, le signal qui est reçu par le téléphone mobile comporte différentes versions temporellement retardées du signal initialement transmis, versions qui sont le résultat des caractéristiques de transmission multitrajet du milieu de transmission.

Le récepteur Rake RR est utilisé pour effectuer l'alignement temporel, le désembrouillage, le désétalement et la combinaison des versions retardées des signaux initiaux, de façon à délivrer les flux d'informations contenus dans les signaux initiaux.

Outre les moyens classiques qui viennent d'être brièvement évoqués, l'étage numérique ETN comporte par ailleurs un bloc BSV comportant des moyens d'estimation de vitesse qui vont estimer la vitesse de déplacement du mobile à partir du signal numérique I et Q reçu en entrée de cet étage numérique ETN, et d'une auto-covariance normalisée de la puissance instantanée de ce signal reçu.

Fonctionnellement, les moyens de traitement MTR du bloc BSV comportent des premiers moyens de calcul de puissance, aptes à calculer la puissance instantanée du signal, des moyens de filtrage passe-bas MFR, des deuxièmes moyens de calcul MCL2 aptes à calculer une puissance moyenne, et des moyens de soustraction aptes à retrancher cette puissance moyenne de l'auto-corrélation de la puissance instantanée. On reviendra plus en détail sur ces moyens ci-après.

Par ailleurs, les moyens d'estimation de vitesse BSV comportent en outre des moyens d'adaptation MDT qui, comme on le verra plus en détail ci-après, pourront adapter le paramètre de décalage temporel $\tau$ de l'auto-covariance en fonction du résultat de l'auto-covariance normalisée.

Matériellement, les moyens d'estimation de vitesse BSV peuvent être réalisés par exemple par un processeur de traitement du signal, les différents traitements effectués dans ces moyens étant réalisés de façon logicielle. Ces traitements sont alors sous forme de code programme pouvant être aisément écrits par l'homme du métier à partir de la définition fonctionnelle de ces traitements. Les moyens de code programme sont alors par exemple stockés dans une mémoire morte associée au processeur. Ceci étant, une réalisation entièrement matérielle (hardware) ou bien partiellement matérielle est également possible, par exemple sous forme d'un circuit intégré spécifique (ASIC).

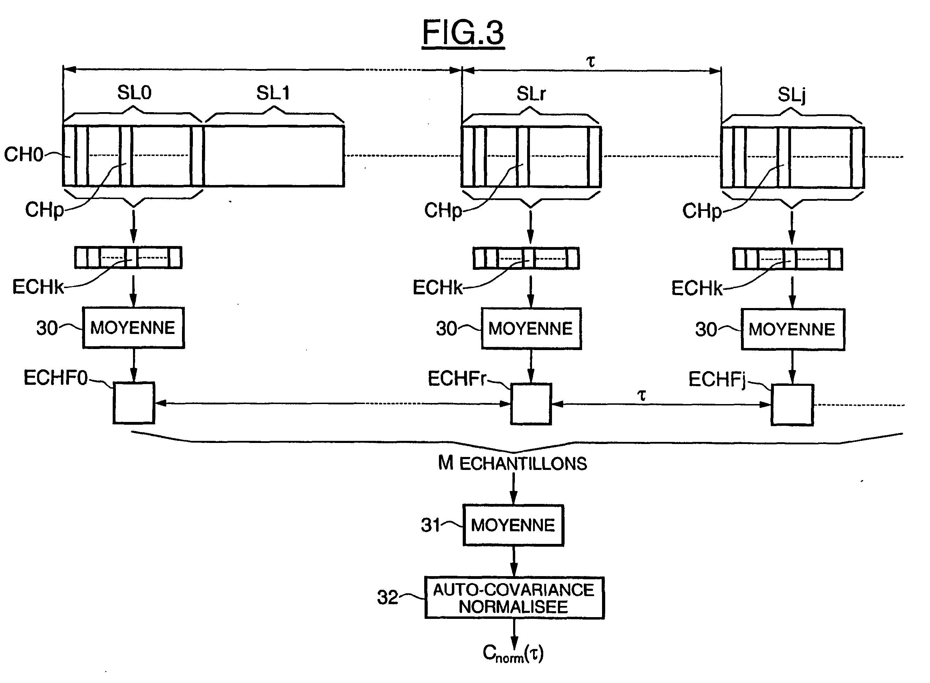

On se réfère maintenant plus particulièrement à la figure 3, pour décrire plus en détail un mode de mise en oeuvre de l'invention.

Comme indiqué plus haut, dans un système CDMA, le signal initial contenant les informations (symboles) est embrouillé et étalé en utilisant le code d'embrouillage de la station de base et le code orthogonal (code OVSF) du téléphone TP.

En conséquence, les symboles sont transformés en fragments (« chips » en langue anglaise) ayant un longueur prédéterminée (par exemple égale à 260 ns), et correspondant à un taux de fragments prédéterminé (« chip rate ») égal par exemple à 3,84 Mcps.

A titre indicatif, un symbole peut être transformé en un nombre de fragments pouvant aller de 4 à 256.

Les informations émises par la station de base et formées de fragments, sont véhiculées au sein de trames successives subdivisées chacune en un nombre prédéterminé d'intervalles (« slots » en langue anglaise) SLi.

A titre indicatif, chaque trame, ayant une longueur de 10 ms, est subdivisée en quinze intervalles, chaque intervalle ayant une longueur égale à 2560 fragments.

Dans le mode de mise en oeuvre qui est décrit ici, l'auto-covariance normalisée est calculée sur M échantillons, mutuellement décalés temporellement du paramètre $\tau$ de décalage temporel de l'auto-covariance.

En conséquence, les premiers moyens de calcul de puissance MCL1 calculeront la puissance instantanée du signal reçu en se basant sur M intervalles SLr, mutuellement temporellement décalés du paramètre τ.

A des fins de simplification, on s'intéresse maintenant à l'un de ces intervalles, à savoir l'intervalle SLr.

Si $x_r(q)$ désigne la puissance instantanée du signal contenu dans un fragment de cet intervalle SLr, $x_r(q)$ est défini par la formule (I) ci-dessous :

$$x_r(q) = I_r(q)^2 + Q_r^2(q) \qquad (I)$$

dans laquelle $I_r$ et $Q_r$ désignent les deux flux d'informations en quadrature de phase correspondant à ce fragment.

Il convient de noter ici que le signal qui est pris en compte est celui qui est reçu par le téléphone portable, que les informations contenues dans ce signal soient destinées ou non à ce téléphone portable.

En pratique, il y aura toujours un signal présent en entrée de l'étage numérique, au moins le signal pilote.

En pratique, les premiers moyens de calcul vont effectuer ce calcul de puissance sur un nombre prédéterminé P de fragments, par exemple sur 256 fragments, c'est-à-dire un fragment tous les dix de l'intervalle. On obtient alors P échantillons de puissance ECHk.

Puis, les moyens de filtrage passe-bas vont effectuer une moyenne 30 (fig. 3) de ces P échantillons de puissance, de façon à obtenir un échantillon final de puissance ECHFr dont le niveau s(r) est défini par la formule (II) ci-dessous :

$$s(r) = \frac{1}{P} \sum_{q=1}^{P} x_r((q-1)D) \qquad (II)$$

Dans cette formule, D désigne un coefficient de décimation qui est pris ici égal à 10, puisque l'on a choisi de calculer la puissance instantanée tous les dix échantillons.

Le fait d'effectuer un filtrage passe-bas supprime la majeure partie des fréquences non désirées, en conservant basiquement l'information Döppler.

Ainsi, à titre indicatif, si l'on considère une fréquence Döppler maximale qui est toujours inférieure ou égale à 500 Hz, puisque l'on ne s'intéresse qu'à des vitesses inférieures ou égales à 300 km/h, on choisira une fréquence de coupure du filtre passe-bas aux alentours de 1000 kHz pour une fréquence porteuse de 2 GHz.

Une fois ces M échantillons obtenus, les deuxièmes moyens de calcul MCL2 vont calculer la moyenne de la puissance instantanée sur ces M échantillons ECHFr conformément à la formule (III) ci-dessous :

$$\bar{s} = \frac{1}{M} \sum_{r=1}^{M} s(r) \qquad (III)$$

Puis, les moyens de traitement vont calculer l'auto-covariance normalisée de ce signal de puissance instantanée, conformément à la formule (IV) ci-dessous :

$$C_{norm}(\tau) = \frac{C(\tau)}{C(o)} = \frac{\sum_{r=1}^{M-1}(s(r+\tau) - \bar{s})(s(r) - \bar{s})}{\sum_{r=1}^{M}(s(r) - \bar{s})^2} \qquad (IV)$$

Dans cette formule, le numérateur correspond à l'auto-covariance du signal pour un paramètre de décalage τ correspondant au décalage temporel entre deux intervalles successivement pris en compte pour le calcul de l'auto-covariance.

Le dénominateur permet de normaliser cette auto-covariance et correspond à une auto-covariance calculée pour un paramètre τ=0.

La vitesse de déplacement du mobile peut être alors calculée conformément à la formule (V) ci-dessous :

$$V = \frac{\sqrt{1 - \sqrt{C_{norm}^{\leftrightarrow}(\tau)}}}{\pi \, \tau} \cdot \frac{c}{F0} \cdot 3{,}6 \qquad\qquad (V)$$

Cette formule (V) correspond à une approximation de Taylor au deuxième ordre, développée autour de τ=0, du terme en cosinus présent dans la formule théorique de l'auto-covariance normalisée.

Bien entendu, des approximations d'ordre supérieur sont possibles.

Dans cette formule (V), c désigne la vitesse de la lumière et F0 la fréquence porteuse, par exemple 2 GHz.

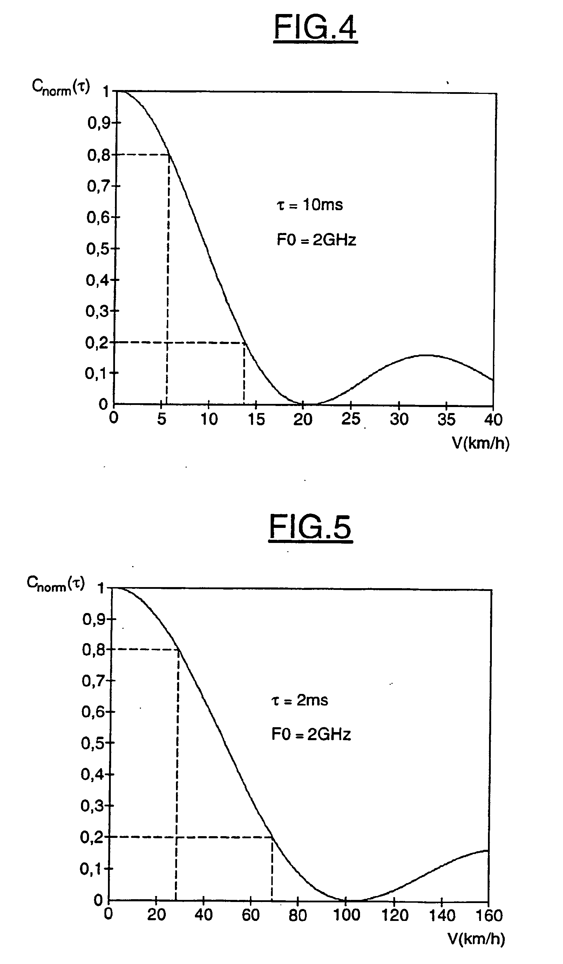

Quelle que soit la valeur de τ, les courbes d'auto-covariance normalisée présentent toutes la même évolution, comme illustré sur les figures 4 et 5 pour des valeurs de τ respectivement égales à 10 ms et 2 ms. La seule différence réside dans le positionnement de la courbe d'auto-covariance par rapport à l'échelle des vitesses.

Ainsi, on voit que pour une valeur de τ=10 ms, la valeur 0 de l'auto-covariance normalisée se situe aux alentours de 20 km/h, tandis qu'elle se situe aux alentours de 100 km/h pour τ=2 ms.

On remarque également que quelle que soit la valeur de τ, les courbes présentent une évolution sensiblement linéaire et monotone entre un résultat d'auto-covariance normalisée égal à 0,2 et un résultat d'auto-covariance normalisée égal à 0,8.

Au-dessus de 0,8, la courbe commence à s'aplatir. En dessous de 0,2, il existe une ambiguïté puisqu'à une même valeur d'auto-covariance normalisée correspondent plusieurs valeurs possibles de vitesse.

Aussi, est-il particulièrement avantageux d'adapter la valeur de τ, mais également la valeur de M, en fonction du résultat obtenu pour l'auto-covariance normalisée $C_{norm}(\tau)$.

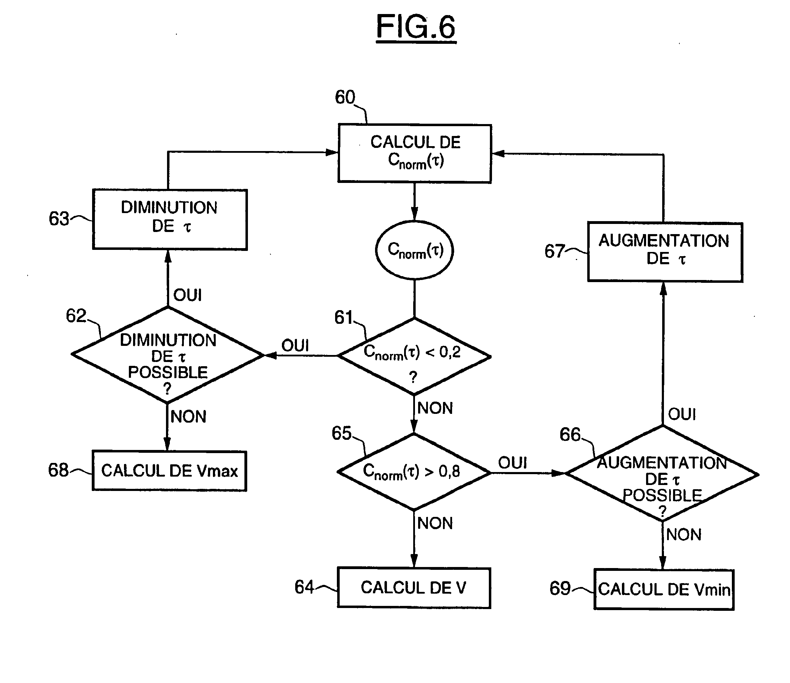

Cette adaptation, effectuée par les moyens d'adaptation, est illustrée sur la figure 6.

Après avoir calculé l'auto-covariance normalisée dans l'étape 60, on compare le résultat à la valeur de seuil inférieure prise ici égale à 0,2 (étape 61).

Si ce résultat est supérieur à 0,2, on le compare dans l'étape 65 à la valeur de seuil supérieure prise ici égale à 0,8.

Si ce résultat est inférieur à 0,8, on détermine alors la vitesse V de déplacement du mobile conformément à la formule (V), dans l'étape 64.

Si, par contre, dans l'étape 61, le résultat de l'auto-covariance normalisée est inférieur à 0,2, les moyens d'adaptation vont examiner s'il est possible de diminuer la valeur de τ. Si tel est le cas, τ est diminué (étape 63) et conjointement, le nombre M d'échantillons de puissance est augmenté. On effectue alors un nouveau calcul d'auto-covariance normalisée dans l'étape 60.

La diminution du paramètre τ n'est pas toujours possible ni souhaitable. En effet, si l'on a déjà effectué un calcul d'auto-covariance normalisée avec une valeur de τ=0,66 ms par exemple, et 400 échantillons de puissance (M=400), ( ce qui correspond à des plages de vitesse comprises entre 80 et 200 km/h, pour une fréquence porteuse égale à 2 GHz ) et que l'on obtient un résultat d'auto-covariance normalisée encore inférieur à 0,2, cela signifie que l'on se situe dans une plage de vitesse extrêmement élevée pour le mobile. Il n'est peut être pas alors intéressant, voire utile, de diminuer encore la valeur de τ pour affiner la précision de vitesse. Dans ce cas, on préfèrera calculer une vitesse $V_{max}$ en utilisant cette valeur de τ et un résultat d'auto-covariance égal à 0,2. La vitesse de déplacement réelle du mobile sera alors supérieure ou égale à cette vitesse $V_{max}$.

De même, si dans l'étape 65, on obtient un résultat d'auto-covariance normalisée supérieur à 0,8, les moyens d'adaptation vont examiner dans l'étape 66 s'il est possible d'augmenter la valeur de τ. Si tel est le cas, on augmente cette valeur de τ dans l'étape 67 en diminuant parallèlement le nombre M d'échantillons. Puis, un nouveau calcul d'auto-covariance est effectué.

Si, par contre, on a déjà effectué un calcul d'auto-covariance avec une valeur de τ=10 ms par exemple et M=100, et qu'on obtient un résultat d'auto-covariance normalisée supérieur à 0,8, cela signifie que la vitesse de déplacement du mobile est très faible. Il n'est alors peut être pas nécessaire d'augmenter la valeur de τ pour affiner la précision sur la vitesse de déplacement du mobile.

On calculera alors, dans l'étape 69, une valeur de vitesse $V_{min}$ avec cette valeur de τ et un résultat d'auto-covariance égal à 0,8. La vitesse réelle du mobile sera alors inférieure ou égale à cette valeur $V_{min}$.

L'invention n'est pas limitée aux modes de réalisation et de mises en oeuvre qui viennent d'être décrits, mais en embrasse toutes les variantes.

Ainsi, l'invention peut être mise en oeuvre dans une station de base, à partir du signal reçu par la station de base en provenance du téléphone mobile.

Par ailleurs, l'invention s'applique également à des systèmes de communication sans fil, qui utilisent une division de fréquence et/ou une division temporelle, comme par exemple les systèmes de téléphone du type GSM.

**Revendications**

1. Procédé d'estimation de la vitesse de déplacement d'un terminal mobile (TP) d'un système de communication sans fil dialoguant avec une station (SB), dans lequel l'estimation de la vitesse comporte un calcul d'une auto-covariance normalisée ($C_{norm}(\tau)$) de la puissance instantanée du signal reçu par le terminal ou par la station (SB), **caractérisé par le fait que**
ledit calcul de l'auto-covariance normalisée ($C_{norm}(\tau)$) est effectué avec un paramètre de décalage temporel $\tau$ choisi de façon à obtenir un résultat d'auto-covariance normalisée compris entre un seuil inférieur égal à environ 0.2, et un seuil supérieur égal à environ 0,8.

2. Procédé selon la revendication 1, **caractérisé par le fait que** l'estimation de vitesse comporte une adaptation de la valeur du paramètre $\tau$ de façon à obtenir un résultat d'auto-covariance normalisée ($C_{norm}(\tau)$) situé entre le seuil inférieur et le seuil supérieur.

3. Procédé selon l'une des revendications précédentes, **caractérisé par le fait que** le calcul de l'auto-covariance normalisée ($C_{norm}(\tau)$) comporte un calcul de puissance du signal, puis un filtrage passe-bas et une soustraction de la puissance moyennée.

4. Procédé selon la revendication 3, **caractérisé par le fait que** le signal véhicule des informations formées de fragments incorporés au sein d'intervalles successifs contenant chacun un nombre prédéterminé de fragments, **par le fait que** le calcul de l'auto-covariance normalisée s'effectue sur M intervalles (SLr) mutuellement décalés temporellement du paramètre de décalage temporel $\tau$ de l'auto-covariance normalisée ($C_{norm}(\tau)$), **par le fait que** le calcul de la puissance du signal et le filtrage passe-bas comportent pour chacun des M intervalles, un calcul de puissance sur un nombre prédéterminé P de fragments de l'intervalle considéré de façon à obtenir P échantillons de puissance, puis une moyenne de ces P échantillons de façon à obtenir un seul échantillon final de puissance (ECHFr) pour ledit intervalle considéré, et **par le fait que** la détermination de la puissance moyennée s'effectue par une moyenne des M échantillons finals de puissance.

5. Procédé selon les revendications 2 et 4, **caractérisé par le fait que** l'estimation de vitesse comporte une adaptation de la valeur du paramètre $\tau$ et une adaptation de la valeur de M, M augmentant lorsque $\tau$ diminue, et diminuant lorsque $\tau$ augmente.

6. Dispositif d'estimation de la vitesse de déplacement d'un terminal mobile (TP) d'un système de communication sans fil dialoguant avec une station (SB), comprenant une entrée pour recevoir le signal (I,Q) transmis entre la station et le terminal et des moyens d'estimation de vitesse (BSV) comportant des moyens de traitement (MTR) aptes à calculer une auto-covariance normalisée de la puissance instantanée du signal reçu sur ladite entrée,
**caractérisé par le fait que** lesdits moyens de traitement (MTR) sont aptes à calculer l'auto-covariance normalisée avec un paramètre de décalage temporel $\tau$ choisi de façon à obtenir un résultat d'auto-covariance normalisée compris entre un seuil inférieur égal à environ 0,2, et un seuil supérieur égal à environ 0,8.

7. Dispositif selon la revendication 6, **caractérisé par le fait que** les moyens d'estimation de vitesse comportent des moyens d'adaptation (MDT) aptes à effectuer une adaptation de la valeur du paramètre $\tau$ de façon à obtenir un résultat d'auto-covariance normalisée situé entre le seuil inférieur et le seuil supérieur.

8. Dispositif selon l'une des revendications 6 à 7, **caractérisé par le fait que** les moyens de traitement comportent des premiers moyens de calcul de puissance (MCL1) aptes à un calculer la puissance du signal, des moyens de filtrage passe-bas (MFR), des deuxièmes moyens de calcul (MCL2) aptes à calculer une puissance moyenne et des moyens de soustraction (STR) aptes à retrancher cette puissance moyenne de l'auto-corrélation de la puissance instantanée.

9. Dispositif selon la revendication 8, **caractérisé par le fait que** le signal véhicule des informations formées de fragments incorporés au sein d'intervalles successifs contenant chacun un nombre prédéterminé de fragments, **par le fait que** les moyens de traitement (MTR) sont aptes à effectuer le calcul de l'auto-covariance normalisée sur M intervalles (SLr) mutuellement décalés temporellement du paramètre de décalage temporel $\tau$ de l'auto-covariance normalisée, **par le fait que** les premiers moyens de calcul (MCL1) et les moyens de filtrage passe-bas (MFR) sont aptes pour chacun des M intervalles, à effectuer un calcul de puissance sur un nombre prédéterminé P de fragments de l'intervalle considéré de façon à obtenir P échantillons de puissance, puis une moyenne de ces P échantillons de façon à obtenir un seul échantillon final de puissance pour ledit intervalle considéré, et **par le fait que** les deuxièmes moyens de calcul (MCL2) effectuent une moyenne des M échantillons finals de puissance.

**10.** Dispositif selon les revendications 7 et 9, **caractérisé par le fait que** les moyens d'adaptation (MDT) sont également aptes à effectuer une adaptation de la valeur de M, M augmentant lorsque $\tau$ diminue, et diminuant lorsque $\tau$ augmente.

**11.** Terminal mobile, en particulier téléphone mobile cellulaire, **caractérisé par le fait qu'**il comprend un dispositif selon l'une des revendications 6 à 10.

**12.** Station d'un système de communication sans fil apte à dialoguer avec un terminal mobile, **caractérisée par le fait qu'**elle comporte un dispositif selon l'une des revendications 6 à 10.

**Claims**

**1.** Process for estimating the speed of movement of a mobile terminal (TP) of a wireless communication system talking to a station (SB), in which the estimation of the speed comprises a calculation of a normalized auto-covariance ($C_{norm}(\tau)$) of the instantaneous power of the signal received by the terminal or by the station (SB), **characterized in that** the said calculation of the normalized auto-covariance ($C_{norm}(\tau)$) is performed with a time shift parameter $\tau$ chosen in such a way as to obtain a normalized auto-covariance result lying between a lower threshold equal to around 0.2, and an upper threshold equal to around 0.8.

**2.** Process according to Claim 1, **characterized in that** the estimation of speed comprises an adaptation of the value of the parameter $\tau$ in such a way as to obtain a normalized auto-covariance result ($C_{norm}(\tau)$) situated between the lower threshold and the upper threshold.

**3.** Process according to one of the preceding claims, **characterized in that** the calculation of the normalized auto-covariance ($C_{norm}(\tau)$) comprises a calculation of signal power, then a low-pass filtering and a subtraction of the averaged power.

**4.** Process according to Claim 3, **characterized in that** the signal conveys information formed of fragments incorporated within successive intervals each containing a predetermined number of fragments, **in that** the calculation of the normalized auto-covariance is performed on M intervals (SLr) mutually time-shifted by the time shift parameter $\tau$ of the normalized auto-covariance ($C_{norm}(\tau)$), **in that** the calculation of the signal power and the low-pass filtering comprise for each of the M intervals, a calculation of power over a predetermined number P of fragments of the relevant interval so as to obtain P power samples, then an average of these P samples so as to obtain a single final power sample (ECHFr) for the said relevant interval, and **in that** the determination of the averaged power is performed by averaging the M final power samples.

**5.** Process according to Claims 2 and 4, **characterized in that** the estimation of speed comprises an adaptation of the value of the parameter $\tau$ and an adaptation of the value of M, M increasing as $\tau$ decreases, and decreasing as $\tau$ increases.

**6.** Device for estimating the speed of movement of a mobile terminal (TP) of a wireless communication system talking to a station (SB), comprising an input for receiving the signal (I,Q) transmitted between the station and the terminal and means of estimation of speed (BSV) comprising means of processing (MTR) able to calculate a normalized auto-covariance of the instantaneous power of the signal received on the said input, **characterized in that** the said means of processing (MTR) are able to calculate the normalized auto-covariance with a time shift parameter $\tau$ chosen in such a way as to obtain a normalized auto-covariance result lying between a lower threshold equal to around 0.2, and an upper threshold equal to around 0.8.

**7.** Device according to Claim 6, **characterized in that** the means of estimation of speed comprise means of adaptation (MDT) able to perform an adaptation of the value of the parameter $\tau$ in such a way as to obtain a normalized auto-covariance result situated between the lower threshold and the upper threshold.

**8.** Device according to one of Claims 6 to 7,
**characterized in that** the means of processing comprise first means of calculation of power (MCL1) able to calculate the power of the signal, means of low-pass filtering (MFR), second means of calculation (MCL2) able to calculate an average power and means of subtraction (STR) able to deduct this average power from the autocorrelation of the instantaneous power.

9. Device according to Claim 8, **characterized in that** the signal conveys information formed of fragments incorporated within successive intervals each containing a predetermined number of fragments, **in that** the means of processing (MTR) are able to perform the calculation of the normalized auto-covariance performed on M intervals (SLr) mutually time-shifted by the time shift parameter $\tau$ of the normalized auto-covariance, **in that** the first means of calculation (MCL1) and the means of low-pass filtering (MFR) are able for each of the M intervals, to perform a calculation of power over a predetermined number P of fragments of the relevant interval so as to obtain P power samples, then an average of these P samples so as to obtain a single final power sample for the said relevant interval, and **in that** the second means of calculation (MCL2) compute an average of the M final power samples.

10. Device according to Claims 7 and 9, **characterized in that** the means of adaptation (MDT) are also able to perform an adaptation of the value of M, M increasing as $\tau$ decreases, and.decreasing as $\tau$ increases.

11. Mobile terminal, in particular cellular mobile telephone, **characterized in that** it comprises a device according to one of Claims 6 to 10.

12. Station of a wireless communication system able to talk to a mobile terminal, **characterized in that** it comprises a device according to one of Claims 6 to 10.

**Patentansprüche**

1. Verfahren zur Schätzung der Fortbewegungsgeschwindigkeit eines mit einer Station (SB) kommunizierenden mobilen Endgeräts (TP) eines drahtlosen Kommunikationssystems, wobei die Schätzung der Geschwindigkeit eine Berechnung einer normalisierten Autokovarianz ($C_{norm}(\tau)$) der momentanen Leistung des von dem Endgerät oder der Station (SB) empfangenen Signals aufweist,
**dadurch gekennzeichnet, daß** die Berechnung der normalisierten Autokovarianz ($C_{norm}(\tau)$) mit einem Zeitverschiebungsparameter $\tau$ durchgeführt wird, der so gewählt wird, um ein Ergebnis der normalisierten Autokovarianz zu erzielen, das zwischen einer unteren Schwelle von ungefähr gleich 0,2 und einer oberen Schwelle von ungefähr gleich 0,8 liegt.

2. Verfahren nach Anspruch 1, **dadurch gekennzeichnet, daß** die Geschwindigkeitsschätzung eine Anpassung des Werts des Parameters $\tau$ aufweist, derart, um ein Ergebnis der normalisierten Autokovarianz ($C_{norm}(\tau)$) zu erzielen, das zwischen der unteren Schwelle und der oberen Schwelle liegt.

3. Verfahren nach einem der vorstehenden Ansprüche, **dadurch gekennzeichnet, daß** die Berechnung der normalisierten Autokovarianz ($C_{norm}(\tau)$) eine Leistungsberechnung des Signals, dann eine Tiefpaßfilterung und eine Subtraktion der durchschnittlichen Leistung aufweist.

4. Verfahren nach Anspruch 3, **dadurch gekennzeichnet, daß**
das Signal Informationen überträgt, die aus Fragmenten gebildet sind, die in aufeinanderfolgenden Intervallen enthalten sind, die jeweils eine vorgegebene Anzahl von Fragmenten aufweisen, **dadurch**, daß
die Berechnung der normalisierten Autokovarianz über M Intervalle (SLr) erfolgt, die um den Zeitverschiebungsparameter $\tau$ der normalisierten Autokovarianz ($C_{norm}(\tau)$) zueinander zeitlich verschoben sind, **dadurch**, daß
für jedes der M Intervalle die Berechnung der Leistung des Signals und die Tiefpaßfilterung eine Leistungsberechnung über eine vorgegebene Anzahl P von Fragmenten des betrachteten Intervalls aufweist, um so P Leistungsabtastwerte, dann einen Mittelwert dieser P Abtastwerte zu gewinnen, um so einen einzigen finalen Leistungsabtastwert (ECHFr) für das betrachtete Intervall zu gewinnen, und **dadurch**, daß
die Bestimmung der durchschnittlichen Leistung über einen Mittelwert der M finalen Leistungsabtastwerte erfolgt.

5. Verfahren nach den Ansprüchen 2 und 4, **dadurch gekennzeichnet, daß** die Geschwindigkeitsschätzung eine Anpassung des Werts des Parameters $\tau$ und eine Anpassung des Werts von M aufweist, wobei M erhöht wird, wenn $\tau$ verringert wird, und verringert wird, wenn $\tau$ erhöht wird.

6. Vorrichtung zur Schätzung der Fortbewegungsgeschwindigkeit eines mit einer Station (SB) kommunizierenden mobilen Endgeräts (TP) eines drahtlosen Kommunikationssystems mit:

einem Eingang zum Empfangen des zwischen der Station und dem Endgerät übertragenen Signals (I,Q) und Einrichtungen (BSV) zur Geschwindigkeitsschätzung, die Verarbeitungseinrichtungen (MTR) aufweisen, die eine normalisierte Autokovarianz der momentanen Leistung des am Eingang empfangenen Signals durchführen können,

**dadurch gekennzeichnet, daß** die Verarbeitungseinrichtungen (MTR) die normalisierte Autokovarianz mit einem Zeitverschiebungsparameter τ berechnen können, der so gewählt wird, um ein Ergebnis der normalisierten Autokovarianz zu erzielen, das zwischen einer unteren Schwelle von ungefähr gleich 0,2 und einer oberen Schwelle von ungefähr gleich 0,8 liegt.

7. Vorrichtung nach Anspruch 6, **dadurch gekennzeichnet, daß** die Einrichtungen zur Geschwindigkeitsschätzung Anpassungseinrichtungen (MDT) aufweisen, die eine Anpassung des Werts des Parameters τ durchführen können, derart, um ein Ergebnis der normalisierten Autokovarianz zu erzielen, das zwischen einer unteren Schwelle und einer oberen Schwelle liegt.

8. Vorrichtung nach einem der Ansprüche 6 bis 7, **dadurch gekennzeichnet, daß** die Verarbeitungseinrichtungen aufweisen: erste Leistungsberechnungseinrichtungen (MCL1), die die Leistung des Signals berechnen können, Einrichtungen (MFR) zur Tiefpaßfilterung, zweite Berechnungseinrichtungen (MCL2), die eine durchschnittliche Leistung berechnen können, und Subtraktionseinrichtungen (STR), die diese durchschnittliche Leistung von der Autokorrelation der momentanen Leistung abziehen können.

9. Vorrichtung nach Anspruch 8, **dadurch gekennzeichnet, daß**
   das Signal Informationen überträgt, die aus Fragmenten gebildet sind, die in aufeinanderfolgenden Intervallen enthalten sind, die jeweils eine vorgegebene Anzahl von Fragmenten aufweisen, **dadurch**, daß
   die Verarbeitungseinrichtungen (MTR) die Berechnung der normalisierten Autokovarianz über M Intervalle (SLr) durchführen können, die um den Zeitverschiebungsparamter τ der normalisierten Autokovarianz zeitlich zueinander verschoben sind, **dadurch**, daß
   für jedes der M Intervalle die ersten Berechnungseinrichtungen (MCL1) und die Einrichtungen (MFR) zur Tiefpaßfilterung eine Leistungsberechnung über eine vorgegebene Anzahl P von Fragmenten des betrachteten Intervalls durchführen können, um so P Leistungsabtastwerte, dann einen Mittelwert dieser P Abtastwerte zu gewinnen, um so einen einzigen finalen Leistungsabtastwert für das betrachtete Intervall zu gewinnen, und **dadurch**, daß
   die zweiten Berechnungseinrichtungen (MCL2) einen Mittelwert der M finalen Leistungsabtastwerte bilden.

10. Vorrichtung nach den Ansprüchen 7 und 9, **dadurch gekennzeichnet, daß** die Anpassungseinrichtungen (MDT) außerdem eine Anpassung des Werts von M durchführen können, wobei M erhöht wird, wenn τ verringert wird, und verringert wird, wenn τ erhöht wird.

11. Mobiles Endgerät, insbesondere zellulares Mobiltelefon, **dadurch gekennzeichnet, daß** es eine Vorrichtung gemäß einem der Ansprüche 6 bis 10 aufweist.

12. Station eines mit einem mobilen Endgerät kommunikationsfähigen drahtlosen Kommunikationssystems, **dadurch gekennzeichnet, daß** es eine Vorrichtung gemäß einem der Ansprüche 6 bis 10 aufweist.

## FIG.1

# FIG.2

FIG.3

## FIG.4

$\tau = 10ms$

$F0 = 2GHz$

## FIG.5

$\tau = 2ms$

$F0 = 2GHz$

# FIG.6

EP 1 288 675 B1